# EUROPÄISCHE PATENTSCHRIFT

(11) **EP 0 672 511 B1**
(45) Veröffentlichungstag und Bekanntmachung des Hinweises auf die Patenterteilung: **28.07.1999**
(21) Anmeldenummer: 95103068.3
(22) Anmeldetag: 03.03.1995
(51) Int. Cl.: B29C 45/44

(54) **Verfahren zur Herstellung einer sich axial verjüngenden Zugelement-Wickelrolle für Sicherheitsgurtanordnungen bei Kraftfahrzeugen sowie Wickelrolle und Spritzgussform zur Ausführung dieses Verfahrens**
Method for manufacturing a conical pulling element-winding roller for seat belts in motor vehicles as well as winding roller and injection mould for carrying out the method
Procédé de fabrication d'un élément de traction-rouleau d'enroulement conique pour ceintures de sécurité dans des véhicules automobiles ainsi que rouleau d'enroulement et moule d'injection pour la mise en oeuvre du procédé

(30) Priorität: 16.03.1994 DE 4409009
(43) Veröffentlichungstag der Anmeldung: 20.09.1995
(73) Patentinhaber: TAKATA (EUROPE) VEHICLE SAFETY TECHNOLOGY GmbH, D-89081 Ulm (DE)
(72) Erfinder: Kopetzky, Robert, D-89173 Lonsee (DE); Dreizler, Sabine, D-70619 Stuttgart (DE); Diepold, Ulrich, D-89081 Ulm (DE); Pleyer, Matthias, D-89081 Ulm (DE)
(74) Vertreter: Manitz, Finsterwald & Partner

(56) Entgegenhaltungen:
- EP-A- 0 188 301
- DE-A- 4 225 073
- FR-A- 2 340 183
- GB-A- 1 479 165
- GB-A- 2 118 022
- US-A- 2 583 441
- US-A- 3 150 222
- US-A- 4 155 698

## Beschreibung

Die Erfindung betrifft ein Verfahren zur Herstellung einer sich axial verjüngenden, einem im wesentlichen hohlen Rotatiönskorper aufweisenden Zugelement-Wickelrolle nach dem Oberbegriff des Anspruches 1. Weiter hat die Erfindung eine Zugelement-Aufwickelrolle nach dem Oberbegriff des Anspruches 2 und eine Spritzgußform nach dem Oberbegriff des Anspruches 11 zum Gegenstand.

Zugelement-Wickelrollen bei Sicherheitsgurtanordnungen in Kraftfahrzeugen, zu deren Herstellung das erfindungsgemäße Verfahren bestimmt ist, sind bekannt (DE 42 25 073 A1) und dienen dazu, den von einer Person angelegten Sicherheitsgurt leicht zu straffen, damit er spielfrei am Körper des Fahrzeuginsassen anliegt. Die entgegengesetzt verjüngte Ausbildung der beiden mit einem Seil ein Rückzugsgetriebe bildenden vorzugsweise konisch ausgebildeten Zugelement-Aufwickelrollen hat den Sinn, am Sicherheitsgurt unabhängig von der Auszugslänge desselben eine im wesentlichen konstante Rückzugskraft angreifen zu lassen, obwohl die am Eingang des Getriebes vorgesehene Spiralfeder eine bei zunehmender Spannung progressiv ansteigende Rückzugskraft-Charakteristik aufweist.

Für eine wirtschaftliche Herstellung der aus Kunststoffmaterial bestehenden Wickelrollen eignet sich in erster Linie das Spritzgußverfahren, wobei jedoch aufgrund der am Außenumfang der Wickelrolle vorgesehenen Aufnahmerillen für das Zugelement, insbesondere Seil, zur Ermöglichung einer einwandfreien Ausformung die Spritzgußform normalerweise axial geteilt sein muß. Hierdurch kommt es bei der Ausformung zu Graten in den Seil-Aufnahmerillen, was entweder eine wirtschaftlich nicht vertretbare Nachbearbeitung erforderlich macht oder bei nicht erfolgender Nachbearbeitung dazu führen kann, daß das auf der Wickelrolle im Betrieb immer wieder auf- und abgewickelte Seil mit der Zeit beschädigt werden kann, was eine Bruchgefahr bedingt und damit zu einem Versagen der für die Sicherheit des Fahrzeuginsassen wichtigen Straffung des angelegten Sicherheitsgurtes führen kann.

Das Ziel der Erfindung besteht also darin, ein Verfahren, eine Zugelement-Wickelrolle und eine Spritzgußform der eingangs genannten Gattung zu schaffen, mit denen die Wickelrolle wirtschaftlich mit vollständig glatter Oberfläche innerhalb der Aufnahmerillen hergestellt werden kann, ohne daß es nach dem Spritzgießen einer Nachbearbeitung bedarf.

Zur Lösung dieser Aufgabe sieht die Erfindung das Verfahren nach Anspruch 1 vor. Hierdurch entsteht eine Zugelement-Wickelrolle nach Anspruch 2.

Die erfindungsgemäße Zugelement-Wickelrolle ist weiter durch die Merkmale des Anspruches 3 gekennzeichnet. Eine für die Zwecke der Erfindung geeignete Spritzgußform entnimmt man den Ansprüchen 12 und 13.

Vorteilhafte Weiterbildungen der Erfindung sind durch die Unteransprüche gekennzeichnet.

Der Grundgedanke der Erfindung besteht also darin, die Wikkelrolle und insbesondere die darauf angeordneten Aufnahmerillen so auszubilden, daß trotz der im Bereich der Aufnahmerillen für das Zugelement nicht zu vermeidenden Hinterschneidungen ein axiales Abziehen des im Bereich der Außenfläche der Wickelrolle einstückigen Formteils des Spritzgußwerkzeuges in Verjüngungsrichtung möglich ist. Hierbei geben insbesondere die zwischen den Aufnahmerillen vorhandenen radial nach außen vorstehenden Rippen und/oder die Umfangswand des vorzugsweise hohl ausgebildeten Wickelkörpers und/oder die sich von letzterem im wesentlichen radial nach innen zu einem dort vorzugsweise vorgesehenen Tragzapfen erstreckenden Wände in der für ein zerstörungsfreies Ausformen erforderlichen Weise elastisch nach. Nach dem Ausformen kehren dann die zeitweise elastisch verformten Elemente wieder in ihre Ausgangslage zurück, so daß die fertige Zugelement-Wickelrolle schließlich exakt die durch die Spritzgußform bestimmte Gestalt aufweist.

Die erfindungsgemäße elastische Ausbildung der Wickelrolle ist gerade bei für Sicherheitsgurtanordnungen bestimmte, sich verjüngende, insbesondere konische Wickelrollen deswegen besonders geeignet, weil die für die Straffung eines Sicherheitsgurtes erforderlichen Kräfte vergleichsweise gering und mit den bei einem Unfall auftretenden hohen Zugkräften nicht vergleichbar sind. Aufgrund der erfindungsgemäßen Ausbildung entsteht eine bei großen Kräften zwar noch elastisch verformbare, dafür aber völlig gratfreie Umfangsfläche an der Wickelrolle, so daß sie für die Zwecke eines Ausgleichsgetriebes bei einer Sicherheitsgurtanordnung besonders geeignet ist. Erfindungsgemäß wird also der Umstand vorteilhaft ausgenutzt, daß die Wickelrolle im Gebrauch nur vergleichsweise geringe Kräfte aufnehmen muß, so daß eine für das zerstörungsfreie Ausformen ausreichende, gleichwohl aber noch die erforderliche Festigkeit gewährleistende Elastizität gewählt werden kann.

Von besonderem Vorteil ist die Ausführungsform nach Anspruch 4, weil hierdurch beim Ausformen jede an eine Aufnahmerille in Verjüngungsrichtung anschließende Umfangsrippe beim Ausformen nur einmal vom zugeordneten komplementären Formteil, nicht aber von weiteren Formteilen axial belastet wird.

Die Erfindung wird im folgenden beispielsweise anhand der Zeichnung beschrieben; in dieser zeigt
- Figur 1: einen schematischen Querschnitt einer in einer erfindungsgemäßen Spritzgußform angeordneten erfindungsgemäßen Zugseil-Wickelrolle gemäß der Erfindung,
- Figur 2: eine Ansicht der Wickelrolle aus Figur 1 von unten,
- Figur 3: eine Ansicht der gleichen Wickelrolle von oben,
- Figur 4: den vergrößerten Ausschnitt IV der Wickelrolle nach Figur 1,
- Figur 4a: eine abgewandelte Ausführungsform der Wickelrolle 11 nach Figur 1 ebenfalls im vergrößerten Ausschnitt IV nach Figur 1 und
- Figur 5: eine ähnliche Ansicht wie Figur 2 einer weiteren vorteilhaften Ausführungsform in etwas vergrößertem Maßstab.

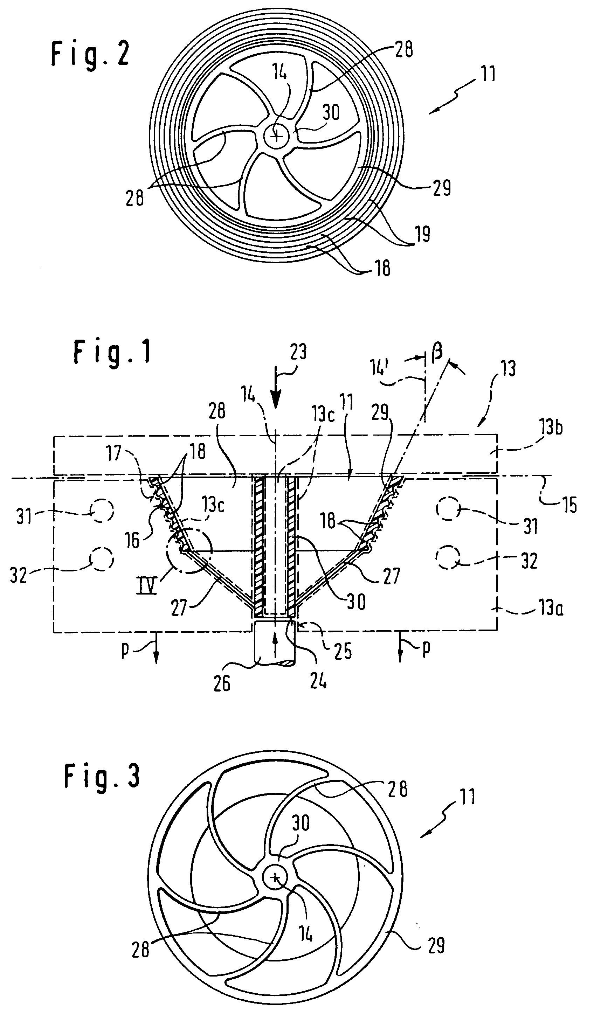

Nach den Figuren 1 bis 3 besteht eine erfindungsgemäße Seil-Wickelrolle 11 aus einem zentralen hohlen Tragzapfen 30, von dem aus sich im wesentlichen in radialer Richtung leicht gekrümmte dünne Tragwände 28 erstrecken, die einen kegelstumpfförmigen dünnwandigen Rotationskörper 29 tragen. Die Wickelrolle 11 ist zur Drehung um eine Achse 14 bestimmt. Die Tragwände 28 sind Zylinderausschnitte, deren Erzeugende axial verlaufen.

Der Tragzapfen 30 erstreckt sich über das verjüngte Ende des Rotationskörpers 29 deutlich hinaus, was aber nicht unbedingt der Fall sein muß, und bildet dort ein Aufnahmeelement für eine Drehlagerung bzw. für eine nicht dargestellte, den Sicherheitsgurt aufnehmende Wickelspule. Vom unteren Endbereich des Tragzapfens 30 erstrecken sich zum Rotationskörper 29 schräg nach außen Versteifungselemente 27, die in der Lage sind, axiale Kräfte aufzunehmen.

Die Wickelrolle 11 ist nach Figur 1 innerhalb einer gestrichelt dargestellten Spritzgußform 13 angeordnet, welche aus zwei Formteilen 13a, 13b besteht, die entlang einer ebenen Fläche 15 aneinanderstoßen, welche mit der senkrecht zur Achse 14 verlaufenden Ebene im Bereich des größten Durchmessers der Wickelrolle 11 zusammenfällt. Im Formteil 13a sind nur rein schematisch angedeutete Heizkanäle 31 und Kühlkanäle 32 vorgesehen.

In dem dem verjüngten Ende der Wickelrolle 11 axial gegenüberliegenden Bereich des unteren Formteils 13a befindet sich eine zentrale Öffnung 25, deren Durchmesser so groß ist, daß dort ein Ausformwerkzeug 26 eingeführt und mit einer Ausformfläche 24 am unteren Ende des Tragzapfens 30 in Eingriff gebracht werden kann.

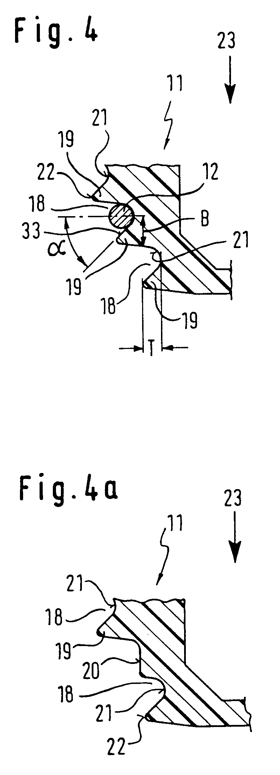

Wie aus den Figuren 1, 2 und 4 zu entnehmen ist, befindet sich in der Außenumfangsfläche des Rotationskörpers 29 eine kombiniert schrauben-spiralförmig angeordnete Seil-Aufnahmerillenanordnung 18, so daß an jeder Umfangstelle in axialer Richtung hintereinander eine Vielzahl von Seil-Aufnahmerillen 18 vorhanden ist. Nach Figur 4 ist beim späteren Gebrauch der Wickelrolle 11 ein Zugseil 12 in den Aufnahmerillen 18 angeordnet. Das Zugseil 12 ist in Figur 4 nur beispielsweise in der mittleren Aufnahmerille 18 dargestellt, um die dimensionsmäßigen Relationen zwischen dem Querschnitt des Zugseils 12 und der Aufnahmerille 18 zu veranschaulichen.

Zwischen den in axialer Richtung benachbarten Aufnahmerillen 18 ist jeweils eine radial vorspringende Rippe 19 vorgesehen, die sich - wie aus den Figuren 4 und 4a ersichtlich - radial nach außen verjüngt und an ihrem Außenumfang zur Bildung eines Scheitels 22 abgerundet ist. Auch der Grund 21 jeder Aufnahmerille 18 ist zur möglichst formschlüssigen Aufnahme des Zugseiles 12 in der aus den Figuren 4 und 4a ersichtlichen Weise abgerundet.

In Verjüngungsrichtung 23 gesehen folgt auf jede Aufnahmerille 18 eine beispielsweise unter einem Winkel α von 45° nach außen ansteigende Flanke 33. Vom Ende der Abrundung des Scheitels 22 der Rippe 19 aus verläuft dann eine annähernd radiale Ebene bis zur anschließenden Aufnahmerille 18.

Nach Figur 1 umgibt eine zur Außenfläche 16 der Wickelrolle 11 komplementär ausgebildete Innenfläche 17 des Formteils 13a die Wickelrolle 11. Der Formteil 13b schließt sich oben an den Formteil 13a an und weist einen sich ins Innere der Wickelrolle 11 erstreckenden, ebenfalls gestrichelt dargestellten Bereich 13c auf, der komplementär zum Innenraum der Wickelrolle 11 ausgebildet ist.

Wie man aus den Figuren 1 bis 4 erkennt, stehen die Flanken 33 der Rippen 19 einem Ausformen durch axiales Abziehen des Formteils 13a in Richtung der Pfeile p in Figur 1 an sich entgegen. Durch geeignete elastische Ausbildung des Materials der Wickelrolle 11, einen nicht zu kleinen Flankenwinkel 33, eine nicht zu große Fußbreite B, wie sie in Figur 4 definiert ist, und eine nicht zu große Rillentiefe T, wie sie ebenfalls in Figur 4 definiert ist, können die Rippen 29 beim axialen Ausformen ebenso wie die Wand des Rotationskörpers 29 als auch die Tragwände 28 so weit ausweichen, daß trotz der Einteiligkeit des Formteils 13a eine saubere Ausformung möglich ist.

Sofern die Aufnahmerillen 18 nach Figur 4a einen größeren axialen Abstand voneinander aufweisen, sollen die Rippen 19 in Verjüngungsrichtung 23 zunächst stark radial nach innen abfallen, um dort in eine Umfangsfläche 20 überzugehen, die in Verfüngungsrichtung 23 sich ebenfalls zumindest etwas verjüngt. Hierdurch wird ein problemloses Ausfedern der vorangehenden Rippe 19 beim Ausformen unterstützt.

Für die Leichtigkeit des Ausformens ist auch der in Figur 1 eingezeichnete Konuswinkel β der Wickelrolle 11 wichtig, welcher in Figur 1 in Bezug auf eine zur Achse 14 parallel verlaufende Linie 14' wiedergegeben ist. Je größer der Konuswinkel β ist, um so leichter geht das Ausformen vonstatten. Wichtig ist weiter die zumindest weitgehend glatte sowie sich in Richtung 23 verjüngende Ausbildung der Innenfläche des Rotationskörpers 29. Im Mittel sollen die Innenfläche und die Außenfläche 16 parallel zueinander verlaufen, so daß die Wanddicke - abgesehen von den durch die Rillen 18, Rippen 19 und gegebenenfalls Umfangsflächen 20 bedingten Veränderungen - in Axialrichtung im Mittel gleich bleibt.

Die Arbeitsweise der beschriebenen Anordnung ist wie folgt:

Zunächst wird die Spritzgußform 13 in die aus Figur 1 ersichtliche geschlossene Form gebracht und aufgeheizt. Dann wird das Kunststoffmaterial in die Form durch nicht gezeigte Kanäle eingespritzt, wobei sich ein Formkörper entsprechend der herzustellenden Wickelrolle 11 bildet. Die Spritztemperatur des Kunststoffes beträgt im allgemeinen 210 bis 220° C.

Als Kunststoffmaterial wird vorzugsweise Polyoximethylen verwendet.

Nachdem die Wickelrolle 11 fertiggespritzt ist, kühlt man diese auf 80 bis 120° C ab und formt dann die fertiggestellte Wickelrolle 11 aus, indem zunächts die ein Stück bildenden Formteile 13b, c in Figur 1 nach oben entfernt werden. Dann wird durch die zentrale Öffnung 25 des Formteils 13a (in Fig. 1 von unten) ein Ausformwerkzeug 26 eingeführt, während auf das Formteil 13a eine Haltekraft in Richtung der Pfeile p in Figur 1 ausgeübt wird. Die auf das Ausformwerkzeug 26 und das Formteil 13a in entgegengesetzter Richtung ausgeübten Kräfte müssen nun so groß sein, daß die in den Aufnahmerillen 18 liegenden komplementären Bereiche des Formteils 13a die Rippen 19 bzw. sonstige Teile der Wickelrolle 11 zerstörungsfrei axial und/oder radial nach innen so weit wegdrücken, daß eine axiale Verschiebung des Formteils 13a relativ zur Wickelrolle 11 bzw. zum Ausformwerkzeug 26 zustandekommt. Wesentlich ist, daß ein radial nach innen gerichteter Vorsprung an der Innenfläche 17 des Formteils 13a beim Ausformen nur mit der in Verjüngungsrichtung 23 unmittelbar anschließenden Rippe 19 in Kontakt kommt, nicht aber mit der übernächsten Rippe 19, welche bereits soweit radial nach innen versetzt sein soll, daß auch sie nur mit dem ihr zugeordneten Vorsprung am Formteil 13a in Eingriff kommt.

Auf diese Weise wird ein zerstörungsfreies Ausformen trotz des Vorhandenseins von Hinterschneidungen auf der Außenfläche 16 gewährleistet. Die Innenflächen der Wickelrolle 11 sollen zumindest weitgehend hinterschneidungsfrei sein.

Für die einzelnen Parameter der erfindungsgemäßen Wickelrolle 11 sind folgende Bereiche bevorzugt:
- Konuswinkel β: 30 bis 45° insbesondere etwa 25° bis 40°;
- Flankenwinkel α: 30 bis 60° insbesondere etwa 45°;
- Fußbreite B: ca. 0,5 mm;
- Rillentiefe T: ca. 0,5 mm;
- Biege-Elastizitätsmodul des verwendeten Kunststoffmateeila bei 23°C: 2,5 bis 3,0 MPa;
- mittlere Dicke der Umfangswand des Rotationskörpers 29: 0,5 bis 1,5, vorzugsweise 1,0 mm.
- Anzahl der über den Umfang verteilten vorzugsweise gleichmäßig verteilten Tragwände 28: 4 bis 8, insbesondere 6
- Krümmungsradius der Tragwände 28: größer als 6 mm;
- Dicke der Tragwände 28: ca. 0,5 mm;
- Durchmesser des Zugelementes 12: 0,3 - 0,6 mm abhängig von der Art des Zugelementes (Faden oder Seil).

Abschließend ist noch darauf hinzuweisen, daß zu Ausformzwecken lediglich die Wickelrolle 11 und die einzelnen Teile derselben elastisch auszubilden sind, während das verwendete Formwerkzeug absolut starr ist. Von besonderer Bedeutung für das Nachgeben beim Ausformen ist die insgesamt hohle Ausbildung der Wickelrolle 11.

Die radialen Tragmittel, nämlich die Tragwände 28 für den Rotationskörper 29 sind erfindungsgemäß radial elastisch. Die axialen Versteifungselemente 27, die für die Übertragung der axialen Ausformkräfte von besonderer Bedeutung sind, sollen dagegen möglichst steif sein.

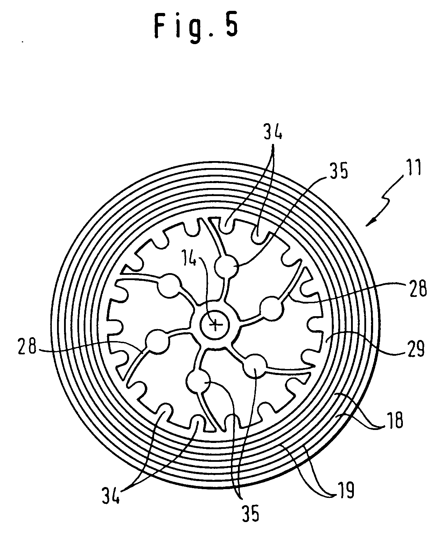

Für ein leichtes Ausformen ist auch die unsymmetrische Ausbildung der Aufnahmerillen 18 nach den Figuren 4 und 5 von Wichtigkeit. Während die in entgegen der Verjüngungsrichtung 23 vorhandenen Flanken im wesentlichen in radialen Ebenen liegen, sind die Ausformungsflanken 33 unter vergleichsweise großen Winkeln α angeordnet.

Die Innenwand des Rotationskörpers 29 ist glatt und sich überall in Axialrichtung 23 vorzugsweise konisch verjüngend ausgebildet. Entsprechend sind auch die Tragwände 28 und der Tragzapfen 30 glatt und ohne Hinterschneidungen ausgebildet, so daß beim Ausformen in diesen Bereichen keine Probleme bestehen. Grundsätzlich könnten auch die Flächen des Tragzapfens 30, der vorzugsweise als Hohlzapfen ausgebildet ist, und der Tragwände 28 entgegen der Verjüngungssrichtung 23 geringfügig verjüngt sein, um das Ausformen zu erleichtern.

Beim Ausführungsbeispiel nach Figur 5 sind an die Innenfläche des Rotationskörpers 29 in geringen Abständen und gleichmäßig über den Umfang verteilt rippenartige Verdickungen 34 mit angespritzt, welche sich parallel zur Erzeugenden des Rotationskörpers 29 erstrecken, also sich in Verjüngungsrichtung 23 ebenso wie die Umfangsfläche des Rotationskörpers 29 je nach dem Konus- bzw. Verjüngungswinkel der Achse 14 zunehmend annähern. Beim Ausführungsbeispiel nach Figur 5 sind über den Umfang gleichmäßig verteilt 18 rippenartige Verdickungen 34 vorgesehen, zwischen denen sich nicht verdickte Bereiche entsprechender Umfangserstreckung befinden.

Innerhalb der Tragwände 28 sind ebenfalls nach beiden Seiten vorstehende rippenartige Verdickungen 35 vorgesehen, welche sich jedoch in radialer Richtung nur über ein so geringes Stück erstrecken, daß die elastische Biegbarkeit der Tragwände 28 durch sie kaum beeinflußt wird.

Die Verdickungen 34, 35 haben den Zweck, daß von der jeweiligen Stirnseite her geeignete Ausformwerkzeuge analog dem Ausformwerkzeug 26 nach Figur 1 beim Ausformen angreifen können.

Die zusätzlichen Ausformwerkzeuge greifen stirnseitig gemäß Figur 1 jeweils von unten an den entsprechenden Stirnseiten der rippenartigen Verdickungen 34 und 35 an. Im unteren Formteil 13a sind für die zusätzlichen Formwerkzeuge axiale Öffnungen vorzusehen, die in ihrer Funktion und Ausbildung der für das Ausformwerkzeug 26 vorgesehenen Öffnung 25 entsprechen.

Beim Vorsehen der Verdickungen 34, 35 können die zum Zwecke der Versteifung vorgesehenen Versteifungselemente 27 fortgelassen oder schwächer ausgebildet werden.

Der Grundgedanke dieser Ausführungsform besteht also darin, die einzelnen Bauteile für den mit erheblichen Kräften verbundenen Ausformvorgang axial zu versteifen, ohne die radiale elastische Nachgiebigkeit wesentlich zu reduzieren.

## Patentansprüche

1. Verfahren zur Herstellung einer sich axial verjüngenden, einen im wesentlichen hohlen Rotationskörper (29) aufweisenden Zugelement-Wickelrolle (11) mit auf der Außenfläche (16) des Rotationskörpers (29) schraubenspiralförmig angeordneten Zugelement-Aufnahmerillen (18) zur Aufnahme eines auf die Wickelrolle (11) aufgewickelten flexiblen Zugelementes (12), insbesondere Seiles, welches Bestandteil einer Sicherheitsgurtanordnung bei Kraftfahrzeugen mit einer Gurtrückzugs- und -Aufwickelvorrichtung ist, die ein Paar von nebeneinander angeordneten, sich entgegengesetzt axial verjüngenden Wickelrollen aufweist, die durch das auf sie aufgewickelte Zugelement (12) verbunden sind und von denen eine in Zugelement-Aufwickelrichtung vorgespannt und die andere mit der Sicherheitsgurtaufwickelspule drehfest verbunden ist, bei welchem Verfahren eine komplementär zur Wickelrolle (11) gestaltete, beheizbare Spritzgußform (13), die zwecks Ausformung der fertigen Wickelrolle (11) aus mindestens zwei Teilen (13a, 13b) besteht, geschlossen, ein geeigneter Kunststoff eingespritzt und nach Verfestigung des eingespritzten Kunststoffes zur Entnahme der fertigen Wickelrolle (11) geöffnet wird,
dadurch **gekennzeichnet,**
daß die Spritzgußform (13) entlang der in Höhe des größten Durchmessers der Wickelrolle (11) gelegten, senkrecht zur Achse (14) verlaufenden Ebene (15) geteilt ist und der die gerillte Außenfläche (16) der Wickelrolle (11) umgebende Formteil (13a) eine ununterbrochene, durchgehende, zur gerillten Außenfläche (16) der Wickelrolle (11), komplementäre Innenfläche (17) aufweist, daß die folgenden Parameter so aufeinander abgestimmt werden, daß eine zerstörungsfreie axiale Abnahme des die gerillte Außenfläche (16) der Wickelrolle (11) umgebenden Formteils (13a) von der verfestigten Wickelrolle (11) möglich ist:
a) mittlere Umfangswandstärke des Rotationskörpers (29);
b) Flankenwinkel (α) der Aufnahmerille (18),
c) Fußbreite (B) der zwischen zwei benachbarten Aufnahmerillen (18) vorhandenen Rippen (19);
d) minimaler Verjüngungswinkel (β) der Wickelrolle (11);
e) Tiefe (T) der Aufnahmerillen (18);
f) Elastizitätsmodul des Kunststoffes der Wickelrolle (11);
g) Form und Stärke von inneren Tragwänden (28) der Wickelrolle (11);
h) Material der Wickelrolle (11), welches vorzugsweise Polyoximethylen ist;
i) Ausformtemperatur der Spritzgußform (13).
und daß der die gerillte Außenfläche (16) umgebende Formteil (13a) und vorzugsweise auch der innere Formteil (13b, 13c) axial von der fertiggespritzten Wickelrolle (11) abgezogen werden.

2. Zugelement-Aufwickelrolle, die nach dem Verfahren gemäß Anspruch 1 aus Kunststoff hergestellt ist, mit einem sich verjüngenden Rotationskörper (29), der durch einen zentralen Tragzapfen (30) und Tragwände (28) gehalten ist und in seiner Außenfläche (16) Zugelement-Aufnahmerillen (18) aufweist,
dadurch **gekennzeichnet,**
daß die in der Außenfläche (16) des Rotationskörpers (29) vorgesehenen Aufnahmerillen (19) ohne Nachbearbeitung gratfrei sind.

3. Zugelement-Aufwickelrolle nach Anspruch 2,
dadurch **gekennzeichnet,**
daß die folgenden Parameter so aufeinander abgestimmt sind, daß eine zerstörungsfreie axiale Abnahme des die gerillte Außenfläche (16) der Wickelrolle (11) umgebenden Formteils (13a) von der Wickelrolle (11) möglich ist:
a) mittlere Umfangswandstärke des Rotationskörpers (29);
b) Flankenwinkel (α) der Aufnahmerille (18),
c) Fußbreite (B) der zwischen zwei benachbarten Aufnahmerillen (18) vorhandenen Rippen (19);
d) minimaler Verjüngungswinkel (β) der Wickelrolle (11);
e) Tiefe (T) der Aufnahmerillen (18);
f) Elastizitätsmodul des Kunststoffes der Wickelrolle (11);
g) Form und Stärke von inneren Tragwänden (28) der Wickelrolle (11);
h) das Kunststoffmaterial.

4. Wickelrolle nach Anspruch 2 oder 3, bei der axial aufeinanderfolgende Aufnahmerillen (18) einen deutlichen axialen Abstand aufweisen,
dadurch **gekennzeichnet,**
daß auf der dem verjüngten Ende der Wickelrolle (11) zugewandten Seite jeder Aufnahmerille (18) eine radial vorstehende Rippe (19) und dann bis zur nächsten Aufnahmerille (18) eine radial weiter innen als die vorangehende Aufnahmerille (18) liegende Umfangsfläche (20) anschließt, die sich in Verjüngungsrichtung (23) der Wickelrolle (11) mit einem kleineren Winkel verjüngt.

5. Wickelrolle nach einem der Ansprüche 2 - 4,
dadurch **gekennzeichnet,**
daß der Scheitel (22) jeder in Verjüngungsrichtung (23) an eine bestimmte Aufnahmerille (18) anschließenden Rippe (19) relativ zum Grund (21) der der bestimmten Aufnahmerille entgegen der Verjüngungsrichtung (23) vorangehenden Aufnahmerille (18) höchsten die gleiche, bevorzugt jedoch eine geringere radiale Erstreckung aufweist.

6. Wickelrolle nach einem der Ansprüche 2 bis 5,
dadurch **gekennzeichnet,**
daß am verjüngten Ende der Wickelrolle (11) eine Ausformfläche (24) vorgesehen ist, an der ein in eine zentrale Öffnung (25) des die Außenfläche (16) der Wickelrolle (11) umgebenden Formteils (13a) eingeführtes Ausformwerkzeug (26) angreifen kann.

7. Wickelrolle nach Anspruch 6,
dadurch **gekennzeichnet,**
daß sich von der Ausformfläche (24) zur Außenfläche (16) insbesondere axiale Kräfte übertragende Versteifungselemente (27) erstrecken.

8. Wickelrolle nach einem der Ansprüche 2 - 7,
dadurch **gekennzeichnet,**
daß sie aus einem dünnwandigen Rotationskörper (29), einem zentralen Tragzapfen (30) und sich zwischen Rotationskörper (29) und Tragzapfen (30) im wesentlichen radial erstreckenden, vorzugsweise ebenfalls dünn ausgebildeten Tragwänden (28) besteht.

9. Wickelrolle nach Anspruch 8,
dadurch **gekennzeichnet,**
daß die Tragwände (28) in axialer Ansicht gebogen ausgebildet sind.

10. Wickelrolle nach einem der Ansprüche 2 bis 9,
dadurch **gekennzeichnet,**
daß sie aus Polyoximethylen besteht.

11. Wickelrolle nach einem der Ansprüche 2 bis 9,
dadurch **gekennzeichnet,**
daß an der Innenfläche des Rotationskörpers 29 und/oder innerhalb der Tragwände (28) im wesentlichen axial verlaufende, rippenartige Verdickungen (34, 35) vorgesehen sind, an deren bei der Entformung zu beaufschlagender Stirnfläche ein Ausformwerkzeug axial angreifen kann.

12. Spritzgußform zur Ausführung des Verfahrens nach Anspruch 1 und zur Herstellung einer Zugelement-Aufwickelrolle nach einem der Ansprüche 2 - 11,
dadurch **gekennzeichnet,**
daß sie entlang der in Höhe des größten Durchmessers der Wickelrolle (11) gelegten, senkrecht zur Achse (14) verlaufenden Ebene (15) geteilt ist und der die gerillte Außenfläche (16) der Wickelrolle (11) umgebende Formteil (13a) eine ununterbrochene, durchgehende, zur gerillten Außenfläche (16) komplementäre Innenfläche (17) aufweist.

13. Spritzgußform nach Anspruch 12,
dadurch **gekennzeichnet,**
daß die Spritzgußform (13) gegenüber dem verjüngten Ende der Wickelrolle (11) eine zentrale Öffnung (25) zur Einführung eines Ausformwerkzeuges (26) aufweist.

## Claims

1. Method for the manufacture of an axially tapering draw element winding reel (11) having a substantially hollow rotational body (29) with helically spiral receiving grooves (18) arranged on the outer surface (16) of the rotational body (29) for receiving a flexible draw element wound onto the winding reel (11), in particular a cable, which is a component of a safety belt arrangement in motor vehicles with a belt retraction and belt winding apparatus having a pair of oppositely axially tapering winding reels arranged alongside one another, which are connected by the draw element (12) wound onto them and of which one is pre-stressed in the draw element winding up direction, and the other is rotationally fixedly connected to the safety belt winding reel, in which method a heatable injection mould (13), which is designed complementary to the winding reel (11) and consists of at least two parts (13a, 13b) for the purpose of demoulding the finished winding reel (11), is closed, a suitable plastic is injected in and the mould is opened after solidification of the injected in plastic for the removal of the finished winding reel (11), characterized in that the injection mould (13) is divided along the plane (15) disposed at the height of the largest diameter of the winding reel (11) perpendicular to the axis (14) and the mould part (13a) surrounding the grooved outer surface (16) of the winding reel (11) has an uninterrupted, continuous inner surface (17) complementary to the grooved outer surface (16) of the winding reel (11); in that the following parameters are so matched to one another that a destruction-free axial removal is possible of the mould part (13a) surrounding the grooved outer surface (16) of the winding reel (11) from the solidified winding reel (11):
a) the average peripheral wall thickness of the rotational body (29);
b) flank angle (α) of the receiving groove (18),
c) foot width (B) of the ribs (19) present between two adjacent receiving grooves (18);
d) minimum angle of taper (β) of the winding reel (11);
e) depth (T) of the receiving grooves (18);
f) modulus of elasticity of the plastic of the winding reel (11);
g) shape and thickness of the inner support walls (28) of the winding reel (11);
h) material of the winding reel (11), which is preferably polyoxymethylene;
i) demoulding temperature of the injection mould (13);
and in that the mould part (13a) surrounding the grooved outer surface (16) and preferably also the inner mould part (13b, 13c) are withdrawn axially from the completed, injected winding reel (11).

2. Draw element winding reel, which is manufactured in accordance with the method of claim 1 of plastic, comprising a tapering rotational body (29) which is held by a central carrying spigot (30) and carrying walls (28) and has draw element receiving grooves (18) in its outer surface (16), characterized in that the receiving grooves (19) provided in the outer surface (16) of the rotational body (29) are free of burrs without finishing work.

3. Draw element winding reel in accordance with claim 2, characterized in that the following parameters are so matched to one another that a destruction-free axial removal from the winding reel (11) is possible of the mould part (13a) surrounding the grooved outer surface (16) of the winding reel (11):
a) the average peripheral wall thickness of the rotational body (29);
b) flank angle (α) of the receiving groove (18),
c) foot width (B) of the ribs (19) present between two adjacent receiving grooves (18);
d) minimum angle of taper (β) of the winding reel (11);
e) depth (T) of the receiving grooves (18);
f) modulus of elasticity of the plastic of the winding reel (11);
g) shape and thickness of the inner support walls (28) of the winding reel (11);
h) the plastic material.

4. Winding reel in accordance with claim 2 or 3, in which the receiving grooves (18), which follow one another axially, have a clear axial spacing, characterized in that the side of each receiving groove (18) adjacent the tapered end of the winding reel (11) is followed by a radially projecting rib (19), and then, up to the next receiving groove (18), a peripheral surface (20), which lies radially further inwardly than the preceding receiving groove (18), and which tapers in the direction of taper (23) of the winding reel (11) with a smaller angle.

5. Winding reel in accordance with one of the claims 2 to 4, characterized in that the apex (22) of each rib (19) following a specific receiving groove (18) in the direction of taper (23) has at most the same radial extent and preferably, however, a lesser radial extent relative to the base (21) of the receiving groove (18) which precedes the specific receiving groove opposite to the direction of taper (23).

6. Winding reel in accordance with one of the claims 2 to 5, characterized in that a demoulding surface (24) is provided at the tapered end of the winding reel (11), on which a demoulding tool (26) introduced into a central opening (25) of the mould part (13a) surrounding the outer surface (16) of the winding reel (11) can engage.

7. Winding reel in accordance with claim 6, characterized in that stiffening elements (27), in particular stiffening elements which transmit axial forces, extend from the demoulding surface (24) to the outer surface (16).

8. Winding reel in accordance with one of the claims 2 to 7, characterized in that it comprises a thin walled rotational body (29), a central carrying spigot (30), and substantially radially extending, preferably likewise thin carrying walls (28) extending between the rotational body (29) and the carrying spigot (30).

9. Winding reel in accordance with claim 8, characterized in that the carrying walls (28) are of curved shape when viewed axially.

10. Winding reel in accordance with one of the claims 2 to 9, characterized in that it consists of polyoxymethylene.

11. Winding reel in accordance with one of the claims 2 to 9, characterized in that rib-like thickened portions (34, 35) extending substantially axially are provided at the inner surface of the rotational body (29) and/or within the carrying walls (28), on which a demoulding tool can act axially at their end surface, which is to be loaded during the demoulding.

12. Injection mould for carrying out the method of claim 1 and for the manufacture of a draw element winding reel in accordance with one of the claims 2 to 11, characterized in that it is divided along the plane (15) disposed at the level of the largest diameter of the winding reel (11) perpendicular to the axis (14), and in that the mould part (13a) surrounding the grooved outer surface (16) of the winding reel (11) has an uninterrupted, continuous inner surface (17) complementary to the grooved outer surface (16).

13. Injection mould in accordance with claim 12, characterized in that the injection mould (13) has a central opening (25) opposite to the tapered end of the winding reel (11) for the introduction of a demoulding tool (26).

## Revendications

1. Procédé de fabrication d'une bobine d'enroulement (11) destinée à un élément de traction, laquelle comporte un corps de révolution (29) sensiblement creux et axialement conique, présentant des rainures de réception (18) agencées sous forme spiralée sur la surface extérieure (16) du corps de révolution (29) afin de recevoir un élément de traction souple (12) enroulé sur la bobine d'enroulement, en particulier un câble, celui-ci faisant partie d'un agencement de ceinture de sécurité de véhicule qui comporte un dispositif de rappel et d'enroulement de ceinture, ce dernier comportant une paire de bobines d'enroulement agencées l'une à côté de l'autre et à conicités axiales opposées, lesdites bobines étant reliées par l'élément de traction (12) enroulé sur elles-mêmes, l'une étant précontrainte dans la direction d'enroulement de l'élément de traction et l'autre étant reliée solidairement en rotation avec la bobine d'enroulement pour la ceinture de sécurité, procédé dans lequel on ferme un moule d'injection (13) chauffé, conçu de manière complémentaire à la bobine d'enroulement (11) et réalisé en au moins deux parties (13a, 13b) dans le but de démouler la bobine d'enroulement finie (11), on injecte une matière plastique appropriée, et après solidification de la matière plastique injectée, on ouvre le moule pour enlever la bobine d'enroulement finie (11),
caractérisé en ce que le moule injection (13) est subdivisé le long d'un plan (15) perpendiculaire à l'axe (14) et disposé à la hauteur du diamètre maximum de la bobine d'enroulement (11), et la partie de moule (13) qui entoure la surface extérieure rainurée (16) de la bobine d'enroulement (11) présente une surface intérieure (17) ininterrompue et continue, complémentaire de la surface extérieure rainurée (16) de la bobine d'enroulement (11), en ce que les paramètres suivants sont ajustés les uns vis-à-vis des autres de telle manière qu'il est possible de procéder à un enlèvement axial sans destruction de la partie de moule (13a) entourant la surface extérieure rainurée (16) de la bobine d'enroulement (11) depuis la bobine d'enroulement solidifiée (11) :
a) l'épaisseur de paroi périphérique moyenne du corps de révolution (29);
b) l'angle des flancs (α) de la rainure de réception (18);
c) la largeur de pied (B) des nervures (19) présentes entre deux rainures de réception voisines (18);
d) l'angle de conicité minimum (β) de la bobine d'enroulement (11);
e) la profondeur (T) des rainures de réception (18);
f) le module d'élasticité de la matière plastique de la bobine d'enroulement (11);
g) la forme et l'épaisseur des parois porteuses intérieures (28) de la bobine d'enroulement (11);
h) le matériau de la bobine d'enroulement (11), lequel est de préférence du polyoximéthylène;
i) la température de démoulage du moule à injection (13),
et en ce que la partie de moule (13a) qui entoure la surface extérieure rainurée (16), et de préférence également la partie de moule intérieure (13b, 13c), sont enlevées axialement depuis la bobine d'enroulement (11) terminée après injection.

2. Bobine d'enroulement destinée à un élément de traction, laquelle a été réalisée selon le procédé de la revendication 1, comprenant un corps de révolution conique (29), tenu par un tenon porteur central (30) et des parois porteuses (28), et comportant dans sa surface extérieure (16) des rainures de réception (18) pour un élément de traction,
caractérisée en ce que les rainures de réception (19) prévues dans la surface extérieure (16) du corps de révolution (29) sont exemptes de bavures sans reprise.

3. Bobine d'enroulement destinée à un élément de traction, selon la revendication 2, caractérisée en ce que les paramètres suivants sont ajustés les uns aux autres de telle manière qu'il est possible de procéder à un enlèvement axial sans destruction de la partie de moule (13a) qui entoure la surface extérieure rainurée (16) de la bobine d'enroulement (11), depuis ladite bobine d'enroulement (11) :
a) l'épaisseur de paroi périphérique moyenne du corps de révolution (29);
b) l'angle des flancs (α) de la rainure de réception (18);
c) la largeur de pied (B) des nervures (19) présentes entre deux rainures de réception voisines (18);
d) l'angle de conicité minimum (β) de la bobine de réception (11);
e) la profondeur (T) des rainures de réception (18);
f) le module d'élasticité de la matière plastique de la bobine d'enroulement (11);
g) la forme et l'épaisseur des parois porteuses intérieures (28) de la bobine d'enroulement (11); et
h) la matière plastique.

4. Bobine d'enroulement selon l'une ou l'autre des revendications 2 et 3, dans laquelle les rainures de réception (18) qui se suivent en direction axiale présentent une distance axiale importante,
caractérisée en ce que, sur le côté de chaque rainure de réception (18) tourné vers l'extrémité conique de la bobine d'enroulement (11) se raccorde une nervure (19) en dépassement radial, puis jusqu'à la rainure de réception suivante (18), une surface périphérique (20) située plus loin vers l'intérieur dans le sens radial que la rainure de réception précédente (18), ladite surface périphérique étant conique avec un angle plus petit dans la direction de conicité (23) de la bobine d'enroulement (11).

5. Bobine d'enroulement selon l'une des revendications 2 à 4, caractérisée en ce que le sommet (22) de chaque nervure (19) qui se raccorde à une rainure de réception déterminée (18) dans la direction de conicité (23) présente, par rapport au fond (21) de la rainure de réception (18) qui précède la rainure de réception déterminée dans le sens contraire à la direction de conicité (23), au maximum la même étendue radiale, et de préférence une étendue radiale plus faible.

6. Bobine d'enroulement selon l'une des revendications 2 à 5, caractérisée en ce qu'à l'extrémité conique de la bobine d'enroulement (11) est prévue une surface de démoulage (24) sur laquelle peut attaquer un outil de démoulage (26) engagé dans une ouverture centrale (25) d'une partie de moule (13a) qui entoure la surface extérieure (16) de la bobine d'enroulement (11).

7. Bobine d'enroulement selon la revendication 6, caractérisée en ce que des éléments de rigidification (27), transmettant en particulier des forces axiales, s'étendent depuis la surface de démoulage (24) jusqu'à la surface extérieure (16).

8. Bobine d'enroulement selon l'une des revendications 2 à 7, caractérisée en ce qu'elle est constituée par un corps de révolution (29) à paroi mince, par un tenon porteur central (30), et par des parois porteuses (28), s'étendant sensiblement radialement entre le corps de révolution (29) et le tenon porteur (30), de préférence également réalisées sous forme mince.

9. Bobine d'enroulement selon la revendication 8, caractérisée en ce que les parois porteuses (28) sont réalisées sous forme incurvée en vue axiale.

10. Bobine d'enroulement selon l'une des revendications 2 à 9, caractérisée en ce qu'elle est réalisée en polyoximéthylène.

11. Bobine d'enroulement selon l'une des revendications 2 à 9, caractérisée en ce qu'il est prévu sur la surface intérieure du corps de révolution (29) et/ou à l'intérieur des parois porteuses (28), des épaississements (34, 35) en forme de nervures qui s'étendent sensiblement axialement, et en ce qu'un outil de démoulage est susceptible d'attaquer axialement leur surface frontale à solliciter lors du démoulage.

12. Moule d'injection pour la mise en oeuvre du procédé selon la revendication 1 et pour la fabrication d'une bobine d'enroulement pour élément de traction, selon l'une des revendications 2 à 11, caractérisé en ce qu'il est subdivisé le long d'un plan (15) perpendiculaire à l'axe (15) et situé à la hauteur du diamètre maximum de la bobine d'enroulement (15), et en ce que la partie de moule (13a) qui entoure la surface extérieure rainurée (16) de la bobine d'enroulement (11), présente une surface intérieure (17) ininterrompue et continue, complémentaire de la surface extérieure rainurée (16).

13. Moule d'injection selon la revendication 12, caractérisé en ce que le moule d'injection (13) présente en vis-à-vis de l'extrémité conique de la bobine d'enroulement (11) une ouverture centrale (25) pour l'introduction d'un outil de démoulage (26).
